# EUROPÄISCHE PATENTSCHRIFT

(11) **EP 0 381 946 B1**
(45) Veröffentlichungstag und Bekanntmachung des Hinweises auf die Patenterteilung: **27.10.1993**
(21) Anmeldenummer: 90100709.6
(22) Anmeldetag: 14.01.1990
(51) Int. Cl.: B01D 53/34, F23G 5/16

(54) **Müllverbrennungsanlage und Verfahren zu Ihrem Betrieb**
Apparatus for refuse incineration and method for its operation
Dispositif pour l'incinération d'ordure et procédé pour sa mis oeuvre

(30) Priorität: 09.02.1989 CH 436/89
(43) Veröffentlichungstag der Anmeldung: 16.08.1990
(73) Patentinhaber: ASEA BROWN BOVERI AG, 5400 Baden (CH)
(72) Erfinder: Zweifel, Martin Rudolf, CH-5430 Wettingen (CH); Vaccani, Amedeo C., CH-8032 Zürich (CH)
(74) Vertreter: Wagner, Wolfgang, Dr. Phil., Dipl.-Phys.

(56) Entgegenhaltungen:
- EP-A- 0 239 281
- EP-A- 0 246 147
- EP-A- 0 247 894
- FR-A- 2 192 275
- US-A- 4 063 521

## Beschreibung

Die Erfindung betrifft eine Müllverbrennungsanlage gemäss dem Oberbegriff des Anspruchs 1 sowie ein Verfahren zu ihrem Betrieb.

Die immer weiter herabgesetzten Grenzwerte für Schadstoffgehalte der Abgase von Anlagen aller Art stellen auch die Erbauer und Betreiber von Müllverbrennungsanlagen vor immer neue Probleme. Auf diesem Gebiet sind es neben Stickoxiden vor allem die hochgiftigen Dioxine und Furane, deren Anteil an den Abgasen auf sehr tiefe Werte reduziert werden muss. Eine Möglichkeit, die dazu erforderlichen Temperaturen von mindestens 800°C bei genügender Verweilzeit zu erreichen, bieten ungekühlte Nachbrennkammern, die als Wirbelkammern ausgebildet sind. In derartigen Kammern bildet sich jedoch bei den angesprochenen hohen Temperaturen Schlacke, die an deren Wänden herabläuft und, insbesondere wenn die Nachbrennkammer über einem Feuerraum mit Feuerungsrost angebracht und mit demselben durch einen ohne weitere Vorkehrungen von der Decke des Feuerraums zum Boden der Nachbrennkammer führenden Durchgang verbunden ist, sodass die Schlacke durch den Durchgang in den Feuerraum und dessen Wände herab in den Bereich des Fuerungsrosts fliesst, grosse Probleme verursachen kann, indem sie sich zwischen Wand und Feuerungsrost verfestigt und den Feuerungsrost blockiert.

Aus der EP-A-0 246 147 ist eine gattungsgemässe Mullverbrennungsanlage bekannt, bei der dieses Problem zwar nicht auftreten wird, da der Durchgang in einen Stutzen ausläuft, welcher sich über den Boden der Nachbrennkammer erhebt, jedoch dürfte sich die Schlacke auf dem ebenen Boden ansammeln und z. T. durch den auf Bodenhöhe angebrachten Rauchabzug abfliessen, was ebenfalls sehr störende Auswirkungen haben kann.

Die genannten Probleme stellen ein bedeutendes Hindernis beim Bau von Müllverbrennungsanlagen mit einem tiefen Ausstoss an Dioxinen und Furanen dar. Der Erfindung liegt daher die Aufgabe zu Grunde, eine Müllverbrennungsanlage anzugeben, bei der die Nachbrennkammer so ausgebildet ist, dass die Schlacke unschädlich abfliessen kann sowie ein Verfahren zu ihrem Betrieb anzugeben, mit dem sichergestellt wird, dass auch die erforderlichen Temperaturen und Verweilzeiten erreicht werden.

Diese Aufgabe wird durch die Merkmale im Kennzeichen des Anspruchs 1 bzw. des Anspruchs 8 gelöst. Die durch die Erfindung erreichten Vorteile sind darin zu sehen, dass sie den Bau von Müllverbrennungsanlagen ermöglicht, mit denen durch hohe Temperaturen in einer ungekühlten Nachbrennkammer genügender Ausbrand für eine ausreichende Reduktion der Dioxine und Furane erzielt wird, ohne dass die unter diesen Umständen kaum vermeidbare Verschlackung zum Problem würde. Diese Vorteile werden mit sehr geringem konstruktivem Aufwand erreicht.

Die Erfindung ist in der Zeichnung in einigen Ausführungsbeispielen dargestellt und wird nachfolgend beschrieben. Es zeigen:
- Fig. 1: Einen schematisch dargestellten Vertikalschnitt einer Müllverbrennungsanlage mit einer Rostfeuerung und einer Nachbrennkammer, welche mit einem koaxialen Durchgang mit dem Feuerraum der Rostfeuerung verbunden ist,
- Fig. 2: einen schematisch dargestellten Vertikalschnitt einer weiteren Müllverbrennungsanlage mit einer Rostfeuerung und einer Nachbrennkammer, wobei der Durchgang vom Feuerraum in der Rückwand unmittelbar an der Decke des Feuerraumes abzweigt und in eine Seitenwand der Nachbrennkammer mündet, und
- Fig. 3: einen schematisch dargestellten Vertikalschnitt einer dritten Müllverbrennungsanlage mit einem Feuerungsrost und einer Nachbrennkammer, wobei der Durchgang im Feuerraum mit Abstand von der Decke in der Rückwand abzweigt und in einer Seitenwand der Nachbrennkammer mündet.

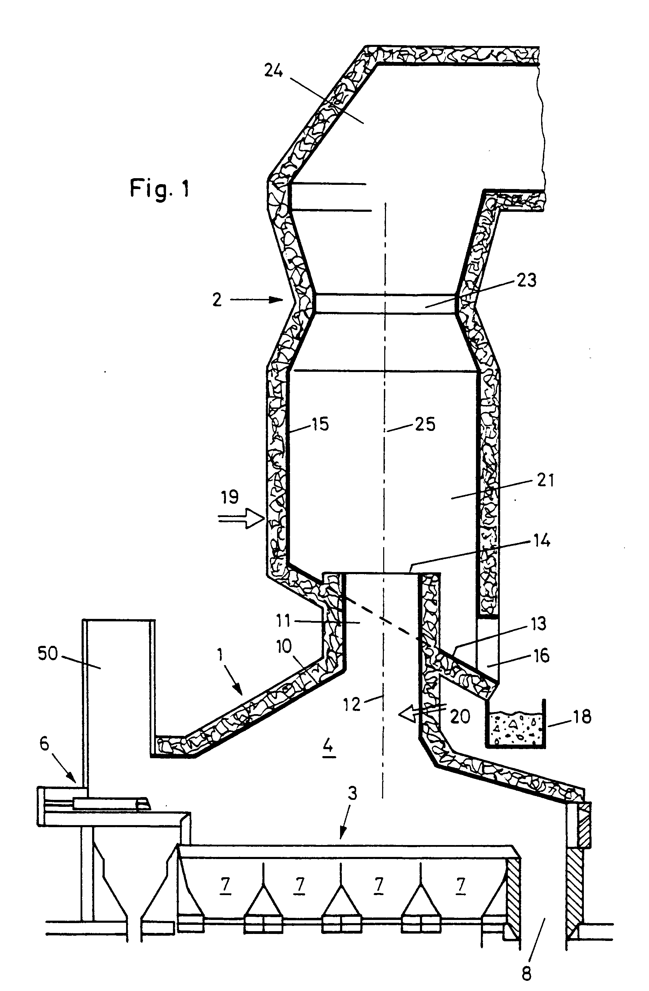

Die in Fig. 1 dargestellte Müllverbrennungsanlage setzt sich aus einem Müllverbrennungsofen 1 und einer Nachbrennkammer 2 zusammen. Der Müllverbrennungsofen 1 weist im wesentlichen einen Feuerungsrost 3 und einen darüberliegenden Feueraum 4 auf. Der Müll wird durch einen Eintragschacht 50 eingebracht und wird am Grund des Eintragschachtes 50 von einer Beschickungseinrichtung 6 in dosierten Mengen auf den Rost 3 geschoben. Der Raum unter dem Feuerungsrost 3 ist in bekannter Weise in Unterwindzonen 7 unterteilt, durch welche die für die Verbrennung des Mülls erforderliche Luft zugeleitet wird. Am Ende des Rostes 3 befindet sich ein Schlackenschacht 8, durch welchen die nicht verbrennbaren Rückstände in eine Schlackenabführeinrichtung (nicht dargestellt) fallen. Eine weitere Detailbeschreibung des Müllverbrennungsofens 1 ist zum Verständnis der Erfindung nicht erforderlich und darf als bekannt angenommen werden.

An der Decke 10 des Feuerraumes 4 ist ein rohrförmiger Durchgang 11 vorgesehen, dessen Achse 12 vertikal verläuft. Der Durchgang 11 erstreckt sich durch den Boden 13 der Nachbrennkammer 2 und ragt mit seiner Mündung 14 über den Boden 13.

Wie aus Fig. 1 ersichtlich ist, ist der Boden 13 mit einer verhältnismässig grossen Neigung versehen, damit die an den Wänden 15 der Nachbrennkammer 2 sich sammelnden und abwärts fliessenden Schlacken über den Boden 13 an einer Schlackenabflussöffnung 16 aus der Nachbrennkammer 2 fliessen und dort von einem Schlackenbehälter 18 aufgenommen werden können.

Wesentlich ist, dass in der Nachbrennkammer 2 eine Vortex- oder Wirbelströmung der Rauchgase und der in den Rauchgasen mitgeschleppten Flugascheteilchen aufrechterhalten wird. Hierzu wird in die Nachbrennkamemr 2 Sauerstoff, vorzugsweise in Form von Luft, eingedüst, siehe Pfeil 19. Diese Sauerstoff-Eindüsung erfolgt zweckmässig tangential, wodurch die Vortex-Strömung erzeugt wird. Die in der Nachbrennkammer 2 eingedüste Luft wird als Tertiärluft bezeichnet, dies im Unterschied zu der in den Unterwindzonen 7 zugeführten Primärluft und der in den Feuerraum 4 eingedüsten Sekundärluft, siehe Pfeil 20.

An den zylinderförmigen Schacht 21 der Nachbrennkammer 2 schliesst eine konische Verengung 23 an, durch welche die Vortex-Strömung infolge der Beschleunigung des Rauchgasstromes verstärkt wird. An die Verengung 23 schliesst ein Bogen 24 an, durch den die Rauchgase umgelenkt und z. B. einer Dampferzeugungsanlage (nicht dargestellt) zugeleitet werden.

Die Nachbrennkammer 2 und der Durchgang 11 sind koaxial angeordnet, so dass die Achse 12 des Durchganges mit der Achse 25 der Nachbrennkammer 2 fluchtet. Der Durchgang 11 und die Nachbrennkammer 2 sind im wesentlichen mit vertikalen Achsen 12, 25 angeordnet.

Für die Dimensionierung der Nachbrennkammer 2 ist davon auszugehen, dass eine Verweilzeit der Rauchgase von mindestens 2 Sekunden eingehalten werden kann. In der Nachbrennkammer 2 ist im Hinblick auf einen möglichst vollständigen Ausbrand eine Temperatur von mindestens 800^{o}C einzuhalten. Diese Temperatur kann jedoch noch wesentlich erhöht werden, z. B. auf 950 - 1350^{o}C, wobei ein bevorzugter Temperaturbereich 1000 - 1300°C beträgt. Anstelle der Tertiärluft wäre es zweckmässig, reinen Sauerstoff einzudüsen und dadurch das Aufwärmen des Ballast bildenden Stickstoffes zu vermeiden. Damit ein vollständiger Ausbrand erfolgt, wird die Nachbrennkammer 2 überstöchiometrisch, d. h. mit Sauerstoffüberschuss, betrieben. In dem Feuerraum 4 kann dagegen, stöchiometrisch, überstöchiometrisch oder auch unterstöchiometrisch gefahren werden. Mit diesen Massnahmen wird trotz der verhältnismässig kleinen Verweilzeit ein vollständiger Ausbrand der Rauchgase zuverlässig erreicht.

Zweckmässig ist es zudem, wenn an der Mündung 14 des Durchgangs 11 eine Eintrittsgeschwindigkeit von 5 - 15 m/s eingehalten wird. Vorzugsweise ist eine Eintrittsgeschwindigkeit der Rauchgase in die Nachbrennkammer 2 von etwa 10 m/s anzustreben.

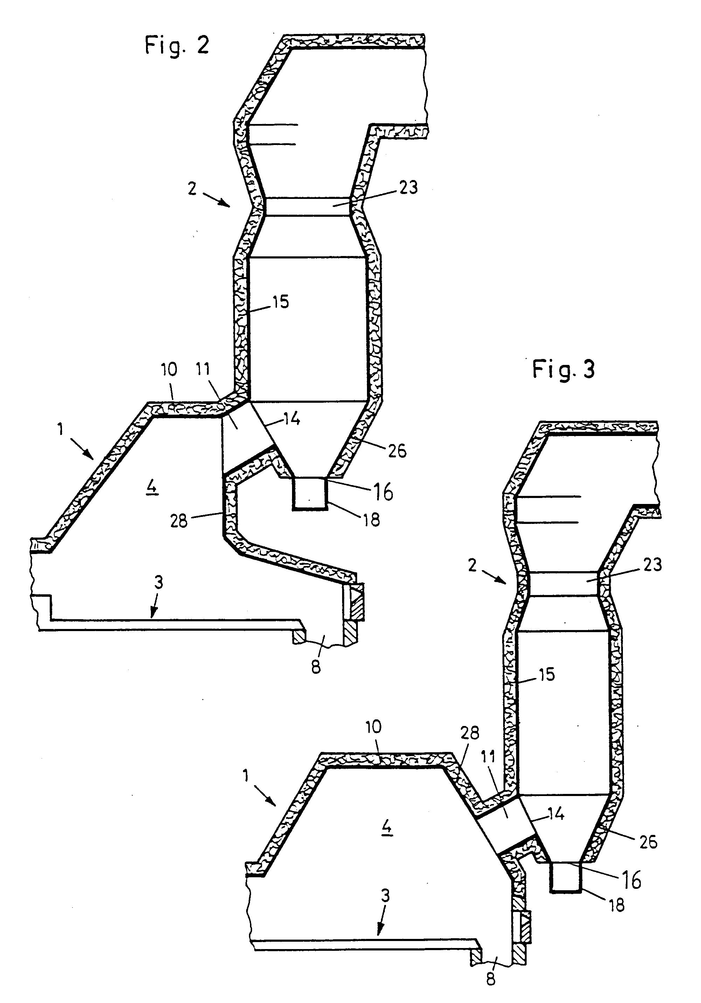

Die in Fig. 2 dargestellte Müllverbrennungsanlage unterscheidet sich gegenüber derjenigen von Fig. 1 im wesentlichen nur dadurch, dass der untere Abschluss 26 als Trichter ausgebildet ist, an dessen Spitze der Schlackenbehälter 18 angeordnet ist.

Die trichterförmige Ausbildung des unteren Abschlusses 26 bringt es mit sich, dass der Durchgang 11 zwischen dem Feuerraum 4 und der Nachbrennkammer 2 in der Rückwand 28 angeordnet ist, sich schräg nach oben erstreckt und seitlich im obern Ende des trichterförmigen Abschlusses 26 mündet. Zweckmässig ist der Durchgang 11 so angeordnet, dass die in die Nachbrennkammer 2 einströmenden Rauchgase tangential gerichtet sind, so dass dadurch die Bildung der Vortex-Strömung begünstigt wird.

Wie bereits erwähnt, fliesst im Betrieb flüssige Schlacke an den Wänden 15 der Nachbrennkammer 2 nieder. Damit das Einfliessen von Schlacke in den Durchgang 11 vermieden wird, ist eine entsprechende Abdeckung (nicht dargestellt) über der Mündung 14 des Durchganges 11 anzuordnen, durch welche die Schlacke beidseits des Durchganges 11 abgeleitet wird.

Die Müllverbrennungsanlage nach Fig. 3 weist gegenüber derjenigen nach Fig. 2 den Unterschied auf, dass der Durchgang 11 mit Abstand von der Decke 10 des Feuerraumes 4 in der Rückwand 28 angeordnet ist. Die Mündung 14 des Durchganges 11 mündet ebenfalls im obern Teil des trichterförmigen Abschlusses 26, wie bei der Anlage nach Fig. 2.

Im Zusammenhang mit der Beschreibung der Anlage nach Fig. 2 und 3 nicht erläuterte Bezugszahlen sind mit denjenigen der Anlage nach Fig. 1 identisch.

Der Durchgang 11 kann bei Anlagen nach Fig. 2 und 3 anstatt in der Rückwand auch in einer Seitenwand des Feuerraumes 4 angeordnet werden, wenn dies aus irgendwelchen Gründen, z.B. örtlichen Verhältnissen erwünscht ist.

## Patentansprüche

1. Müllverbrennungsanlage mit einem Feuerungsrost (3) in einem Feuerungsraum (4), in dessen oberem Bereich ein Durchgang (11) für die Durchleitung der Rauchgase und Flugascheteilchen in eine vom Feuerraum getrennte Nachbrennkammer (2) vorgesehen ist, welche als Wirbelkammer ausgebildet und mit Zuleitungen zum Eindüsen von Sauerstoff (19), vorzugsweise in Form von Luft, versehen ist, **dadurch gekennzeichnet, dass** die Nachbrennkammer (2) einen zu einer Schlackenabflussöffnung (16) hin geneigten Boden (13) aufweist.

2. Müllverbrennungsanlage nach Anspruch 1, **dadurch gekennzeichnet, dass** der Durchgang (11) koaxial zur Achse (25) der Nachbrennkammer (2) angeordnet ist und in einen zylinderförmigen Rohrstutzen ausläuft, welcher sich über den Boden (13) der Nachbrennkammer (2) erhebt.

3. Müllverbrennungsanlage nach Anspruch 2, **dadurch gekennzeichnet, dass** der Durchgang (11) in die Nachbrennkammer (2) in der Decke des Feuerraumes (4) vorgesehen ist.

4. Müllverbrennungsanlage nach Anspruch 1, **dadurch gekennzeichnet, dass** der Boden der Nachbrennkammer (2) als trichterförmiger Abschluss (26) ausgebildet ist.

5. Müllverbrennungsanlage nach Anspruch 4, **dadurch gekennzeichnet, dass** der Durchgang (11) vom Feuerraum (4) am oberen Ende des trichterförmigen Abschlusses (26) in die Nachbrennkammer (2) mündet und über der Mündung (14) eine Abdeckung angebracht ist.

6. Müllverbrennungsanlage nach Anspruch 4 oder 5, **dadurch gekennzeichnet, dass** der Durchgang (11) in die Nachbrennkammer (2) in der Rückwand (28) oder in einer Seitenwand des Feuerraums (4) angeordnet ist.

7. Müllverbrennungsanlage nach einem der Ansprüche 1 bis 6, **dadurch gekennzeichnet, dass** die Nachbrennkammer (2) an ihrem oberen Ende eine konische Verengung (23) aufweist, welche an den zylinderförmigen Schacht (21) der Nachbrennkammer (2) anschliesst.

8. Verfahren zum Betrieb einer Müllverbrennungsanlage nach einem der Ansprüche 1 bis 7, **dadurch gekennzeichnet, dass** die Rauchgase und Flugascheteilchen in der Nachbrennkammer (2) mit einer Temperatur von über 800°C ausgebrannt werden.

9. Verfahren nach Anspruch 8, **dadurch gekennzeichnet, dass** in der Nachbrennkammer (2) eine Temperatur von zwischen 950°C und 1350°C und eine Verweilzeit von mindestens zwei Sekunden eingehalten werden.

10. Verfahren nach Anspruch 9, **dadurch gekennzeichnet, dass** in der Nachbrennkammer (2) eine Temperatur von zwischen 1000°C und 1300°C eingehalten wird.

11. Verfahren nach einem der Ansprüche 8 bis 10, **dadurch gekennzeichnet, dass** in die Nachbrennkammer (2) Sauerstoff überstöchiometrisch eingedüst wird.

## Claims

1. A refuse incinerating plant with a fire grate (3) in a fuel chamber (4), in the upper region of which chamber there is provided a passage (11) for flue gases and flue ash particles to pass through into a secondary combustion chamber (2) separated from the combustion chamber, the secondary chamber being formed as a turbulence chamber and having supply lines for nozzle-injecting oxygen (19), preferably in the form of air, characterised in that the secondary combustion chamber (2) has a base (13) inclined towards a slag discharge opening (16).

2. A refuse incinerating plant according to claim 1, characterized in that the passage (11) is arranged coaxially to the axis (25) of the secondary combustion chamber (2) and runs out into a cylindrical pipe socket, which rises above the base (13) of the secondary combustion chamber (2).

3. A refuse incinerating plant according to claim 2, characterized in that the passage (11) into the secondary combustion chamber (2) is provided in the cover of the combustion chamber (4).

4. A refuse incinerating plant according to claim 1, characterized in that the base of the secondary combustion chamber (2) is formed as a funnel-shaped end (26).

5. A refuse incinerating plant according to claim 4, characterized in that the passage (11) opens from the combustion chamber (4) on the upper end of the funnel-shaped end (26) into the secondary combustion chamber (2) and a cover is attached above the mouth (14).

6. A refuse incinerating plant according to claim 4 or 5, characterized in that the passage (11) into the secondary combustion chamber (2) is arranged in the rear wall (28) or in a side wall of the combustion chamber (4).

7. A refuse incinerating plant according to one of claims 1 to 6, characterised in that the secondary combustion chamber (2) has on its upper end a conical constriction (23) which is connected to the cylindrical shaft (21) of the secondary combustion chamber (2).

8. A method for operating a refuse incinerating plant according to one of claims 1 to 7, characterised in that the flue gases and flue ash particles in the secondary combustion chamber (2) are burnt out at a temperature of over 800°C

9. A method according to claim 8, characterised in that a temperature of between 950°C and 1350°C and a dwell time of at least two seconds are maintained in the secondary combustion chamber (2).

10. A method according to claim 9, characterised in that a temperature of between 1000°C and 1300°C is maintained in the secondary combustion chamber (2).

11. A method according to one of claims 8 to 10, characterised in that oxygen is nozzle-injected into the secondary combustion chamber (2) in an overstoichiometric manner.

## Revendications

1. Installation d'incinération d'ordures comportant une grille de foyer (3) dans un foyer (4), dans la zone supérieure duquel est prévu un passage (11) pour l'acheminement des gaz de fumées et des particules de cendres volantes dans une chambre de post-combustion (2) séparée du foyer, qui est conçue sous la forme d'une chambre tourbillonnaire et est dotée de conduits d'arrivée pour le soufflage d'oxygène (19), de préférence sous la forme d'air, caractérisée en ce que la chambre de post-combustion (2) comporte un fond (13) incliné vers une ouverture d'évacuation de scories (16).

2. Installation d'incinération d'ordures selon la revendication 1, caractérisée en ce que le passage (11) est coaxial à l'axe (25) de la chambre de post-combustion (2) et débouche dans une tubulure cylindrique, qui se soulève au-dessus du fond (13) de la chambre de post-combustion (2).

3. Installation d'incinération d'ordures selon la revendication 2, caractérisée en ce que le passage (11) dans la chambre de post-combustion (2) est prévu à la voûte du foyer (4).

4. Installation d'incinération d'ordures selon la revendication 1, caractérisée en ce que le fond de la chambre de post-combustion (2) est conçue à la manière d'une fermeture (26) en forme de cône.

5. Installation d'incinération d'ordures selon la revendication 4, caractérisée en ce que le passage (11) du foyer (4) à l'extrémité supérieure de la fermeture (26) en forme de cône débouche dans la chambre de post-combustion (2) et en ce que sur l'embouchure (14) est fixé un couvercle.

6. Installation d'incinération d'ordures selon les revendications 4 ou 5, caractérisée en ce que le passage (11) dans la chambre de post-combustion (2) est placé dans la paroi arrière (28) ou dans une paroi latérale du foyer (4).

7. Installation d'incinération d'ordures selon l'une des revendications 1 à 6, caractérisée en ce que la chambre de post-combustion (2) présente à son extrémité supérieure un rétrécissement (23) conique qui se raccorde au puits (21) cylindrique de la chambre de post-combustion (2).

8. Procédé d'exploitation d'une installation d'incinération d'ordures selon l'une des revendications 1 à 7, caractérisé en ce que les gaz de fumées et particules de cendres volantes sont brûlés dans la chambre de post-combustion (2) à une température supérieure à 800 °C.

9. Procédé selon la revendication 8, caractérisé en ce que dans la chambre de post-combustion (2) il est respecté une température comprise entre 950 °C et 1 350 °C et un temps de séjour d'au moins deux secondes.

10. Procédé selon la revendication 9, caractérisé en ce que dans la chambre de post-combustion (2) est respectée une température comprise entre 1 000 °C et 1 300 °C.

11. Procédé selon l'une des revendications 8 à 10, caractérisé en ce que dans la chambre de post-combustion (2) on insuffle de manière sur-stoechiométrique de l'oxygène.
